# DEMANDE DE BREVET EUROPEEN

(11) **EP 2 624 041 A1**
(43) Date de publication de la demande: **07.08.2013**
(21) Numéro de dépôt: 13153227.7
(22) Date de dépôt: 30.01.2013
(51) Int. Cl.: G02B 27/01, G02B 5/02

(54) **Projecteur optique a écran de projection semi-transparent**

(30) Priorité: 03.02.2012 FR 1200319
(71) Demandeur: Thales, 92200 Neuilly Sur Seine (FR)
(72) Inventeur: Augereau, Philippe, 33187 LE HAILLAN (FR); Petitdemange, Aunaud, 33187 LE HAILLAN (FR); Dominici, Johanna, 33187 LE HAILLAN (FR); Laluque, Laurent, 33000 BORDEAUX (FR)
(74) Mandataire: Bréda, Jean-Marc

(57) **Abrégé**

Le domaine général de l'invention est celui des systèmes de visualisation comportant un ou plusieurs projecteurs d'images sur des écrans de visualisation comportant une face semi-transparente (14) permettant de transmettre le paysage extérieur. Dans les dispositifs selon l'invention, cette face semi-transparente comporte une pluralité de motifs (15) diffusant la lumière régulièrement répartis. Ces motifs peuvent être également réfléchissants. Le choix des motifs et leur répartition permet de choisir les taux de transmission et de réflexion de l'écran.

## Description

Le domaine de l'invention est celui des dispositifs de visualisation projetant une image sur un écran semi-transparent. Ces dispositifs permettent d'afficher une image face à l'utilisateur en superposition sur le paysage extérieur. Un des domaines d'utilisation possible est la présentation d'informations dans les véhicules, plus précisément dans les cockpits d'aéronef et en particulier dans les cockpits d'hélicoptères qui disposent de surfaces vitrées importantes.

Ces systèmes de visualisation permettent de conserver l'attention de l'utilisateur sur l'environnement qui l'entoure, tout en lui donnant accès instantanément à des informations additionnelles. Dans le cas de la conduite d'un véhicule, avoir des informations affichées dans le champ visuel de l'environnement extérieur évite à l'utilisateur d'avoir à chercher ces informations sur des écrans situés classiquement sur sa planche de bord ou son tableau de bord.

Un dispositif optique présentant une image en superposition sur l'extérieur est défini par un certain nombre de caractéristiques techniques qui sont:
- Les dimensions du champ visuel ;
- Le niveau de luminance de l'information ;
- Le taux de transmission de l'élément optique ;
- Les dimensions de la boîte à oeil, c'est-à-dire de la zone permettant d'observer l'information ;
- La distance de projection ;
- La conformité de l'information.

Actuellement, les systèmes les plus couramment utilisés sont les viseurs tête haute, appelés aussi « Head-Up Display » ou « HUD », les viseurs de casque ou les lunettes informatives dites « see-through ». Ces dispositifs ont l'avantage de permettre une superposition parfaite d'une image collimatée sur l'extérieur. Ils permettent également d'obtenir des champs visuels corrects, compris entre 20° et 40° et des luminosités suffisantes pour une observation en ambiance lumineuse élevée.

Les HUDs sont généralement disposés dans des véhicules ou des aéronefs et fixés à leur structure. Ils sont composés d'un imageur, généralement à cristaux liquides et d'une optique de projection d'une dizaine de centimètres de diamètre. L'ensemble produit une image réfléchie sur une lame de verre traitée semi-réfléchissante appelée « combiner ». L'information projetée est généralement collimatée et conforme. La limitation principale de cette technologie est la dimension de la boîte à oeil. Sa largeur est réduite à un peu plus de dix centimètres. Toute augmentation des dimensions de cette boîte à oeil nécessite une augmentation significative du volume de l'optique de projection, rendant une telle solution inenvisageable pour une boîte à oeil de très grande dimension.

Le viseur de casque est un système optique comportant, comme un HUD, un imageur et une optique de projection. Il est fixé sur un casque et donne une image collimatée devant l'oeil de l'utilisateur. La visière joue le rôle du combiner. Une telle solution contraint l'utilisateur au port d'un casque et doit concilier masse faible, volume réduit et confort d'utilisation. Par définition, l'observation de l'information ne peut se faire que par une seule personne. Une détection de posture est indispensable pour assurer une conformité d'affichage avec le paysage.

Ces systèmes collimatés présentent un certain nombre d'inconvénients. En effet, un besoin souvent exprimé par les utilisateurs, en particulier dans le domaine aéronautique, est d'avoir un dispositif de projection ayant une très grande boîte à oeil permettant à deux personnes d'observer la même information sur le même dispositif de projection. Ce besoin ne peut être couvert par les dispositifs collimatés.

Un champ visuel supérieur à 40° est également souhaité afin de couvrir une grande partie du champ visuel extérieur. Un tel besoin est corrélé avec le souci de laisser l'espace visuel sur l'extérieur le plus dégagé possible, au détriment des écrans conventionnels du tableau de bord qui masquent la partie basse de l'environnement extérieur.

De plus, le système optique mis en oeuvre doit rester compact et peu coûteux.

Pour résoudre ces différents problèmes et former une image de grande taille face à l'utilisateur, la solution la plus simple est d'afficher une image sur une surface transparente située dans le champ visuel de cet utilisateur. Il existe deux grands types de technologies pour réaliser cette fonction. On peut placer un afficheur de grande taille semi-transparent dans le champ visuel de l'utilisateur ou projeter une image issue d'un afficheur de taille réduite sur une lame ou un écran semi-réfléchissant.

Il existe différents types d'afficheurs transparents matricés ou non. On citera :
- les afficheurs transparents OLED, signifiant « Organic Light Emmitting Device ». Cette solution correspond le mieux au besoin mais elle souffre d'un manque de maturité. La luminosité et la durée de vie des afficheurs sont encore trop faibles et restent incompatibles des fonctionnements en environnements sévères rencontrés dans le domaine automobile ou dans celui de l'avionique. La taille des afficheurs OLED reste par ailleurs assez limitée ;
- les matrices transparentes LCD, signifiant « Liquid Crystal Display ». Les matrices LCD sont passives et filtrent la lumière du paysage. L'affichage réalisé doit prendre en compte cette particularité et assurer une lisibilité permanente, ce qui n'est pas nécessairement simple. La qualité et la transparence de l'image sont limitées par la diffraction des pixels de taille généralement réduite dans la plupart des LCD du commerce.

Deux solutions à base de projecteur d'images sur surface transparente sont couramment employées :
- les projecteurs à projection sur film fluorescent transparent. Un projecteur fonctionnant dans l'ultraviolet projette une image sur un film transparent dans le visible et fluorescent dans l'ultraviolet. Sous l'effet des UV, le film fluorescent émet une lumière monochrome dans le spectre visible. Cette solution n'a pas un très bon rendement et nécessite un projecteur UV puissant pour obtenir une réémission dans le visible satisfaisante ;
- Les projecteurs à projection sur film diffusant transparent. Cette technique plus simple à mettre en oeuvre que la précédente, consiste à éclairer un film ou un écran diffusant uniforme sur toute sa surface avec un projecteur émettant dans le visible. Le diffuseur diffuse l'image projetée, tout en restant relativement transparent et permettant ainsi la vision de l'extérieur. Le compromis entre transmission et diffusion n'est pas simple à trouver. Des films diffusants sont dédiés à la projection publicitaire sur les parois vitrées des magasins. La technique est surtout utilisée de nuit, c'est-à-dire sous faible luminosité ambiante. De jour, cette technique donne des résultats médiocres, le film apparaît laiteux, la transparence est limitée, le rendement en réflexion et la luminosité de l'image projetée restent faibles et peu satisfaisants.

Le système selon l'invention permet d'améliorer de façon significative cette dernière technique. Le système de visualisation par projection selon l'invention comporte un écran semi-transparent ayant à la fois une grande transparence et donnant une bonne luminosité de l'image projetée, tout en ayant une diffraction limitée.

Plus précisément, l'invention a pour objet un système de visualisation comportant au moins un premier projecteur d'images comportant un premier afficheur, une première optique de projection et un écran de visualisation comportant une face semi-transparente, l'image dudit premier afficheur étant réalisée par la première optique de projection sur cette face semi-transparente, **caractérisé en ce que** ladite face semi-transparente comporte une pluralité de motifs diffusants la lumière régulièrement répartis.

Avantageusement, les motifs diffusants comportent un traitement réfléchissant et la surface occupée par les motifs diffusants est comprise entre 20% et 50% de la surface totale de la face semi-transparente.

Avantageusement, les motifs sont des carrés, le côté des carrés étant compris entre 100 micromètres et 500 micromètres. Préférentiellement, le côté des carrés vaut 250 micromètres.

Avantageusement, les motifs sont des bandes dont la largeur est comprise entre 100 micromètres et 500 micromètres.

Avantageusement, le système comporte au moins un second projecteur d'images comportant un second afficheur et une seconde optique de projection, l'image du premier afficheur étant réalisée par la première optique de projection sur une première zone de la face semi-transparente de l'écran de visualisation, l'image du second afficheur étant réalisée par la seconde optique de projection sur une seconde zone de la face semi-transparente de l'écran de visualisation, la seconde zone étant en partie ou en totalité disjointe de la première zone.

Avantageusement, le système comporte au moins un troisième projecteur d'images comportant un troisième afficheur et une troisième optique de projection, l'image du premier afficheur étant réalisée par la première optique de projection sur une première zone de la face semi-transparente de l'écran de visualisation, l'image du troisième afficheur étant réalisée par la troisième optique de projection sur la même première zone de la face semi-transparente de l'écran de visualisation.

Avantageusement, l'écran de visualisation est un pare-brise de véhicule ou la verrière d'un cockpit d'aéronef.

L'invention sera mieux comprise et d'autres avantages apparaîtront à la lecture de la description qui va suivre donnée à titre non limitatif et grâce aux figures annexées parmi lesquelles :
La figure 1 représente une vue en coupe d'un système de visualisation comportant un premier projecteur d'images selon l'invention ;
La figure 2 représente une vue de face d'un écran de visualisation selon l'invention comportant une vue agrandie des motifs diffusants selon un premier mode de réalisation ;
La figure 3 représente une vue agrandie des motifs diffusants selon un second mode de réalisation ;
La figure 4 représente une vue de face d'un système de visualisation comportant deux projecteurs d'images selon l'invention ;
La figure 5 une vue en coupe d'un système de visualisation comportant deux projecteurs d'images selon l'invention.

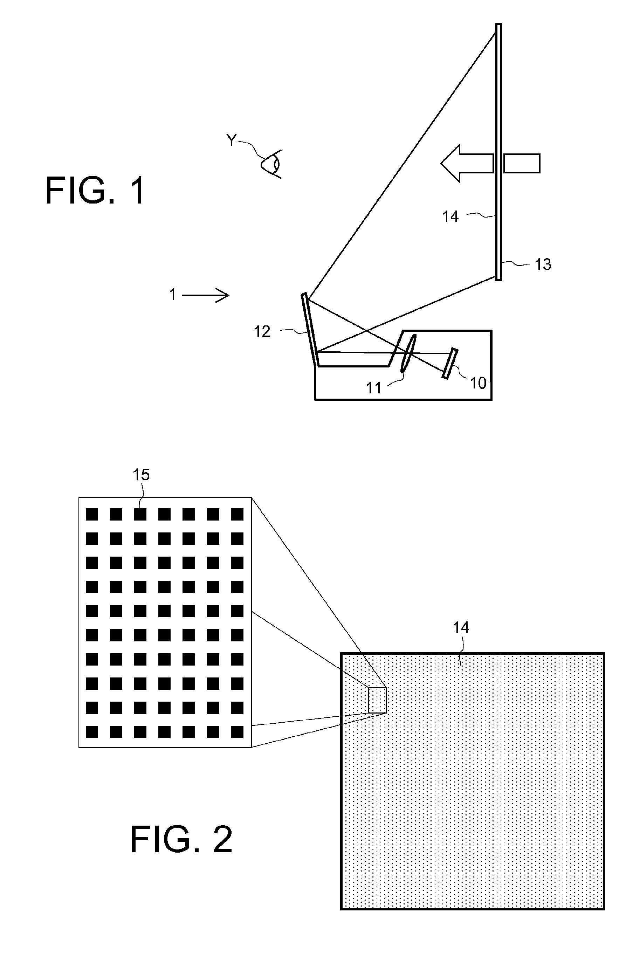

La figure 1 représente une vue en coupe d'un système de visualisation comportant un premier projecteur d'images selon l'invention. Ce projecteur comporte essentiellement un afficheur 10, une optique de projection 11 et un écran de visualisation 13.

L'afficheur peut être monochrome ou couleur. Le système selon l'invention peut s'adapter à tous types d'afficheurs. Généralement, l'afficheur est de petites dimensions, n'excédant pas quelques centimètres. Sa résolution est importante. Il comporte généralement un modulateur matriciel passif et une source d'éclairage puissante. Le modulateur peut être une matrice à cristaux liquides dite LCD, un modulateur électromécanique à micro-miroirs ou « MEMS ». Les sources d'éclairage peuvent être des diodes électroluminescentes, des lasers ou des lampes à arc.

L'optique de projection 11 est une optique conventionnelle ayant un grandissement important de façon à former une image très agrandie de l'afficheur sur une face 14 de l'écran de visualisation 13. L'écran peut atteindre un à deux mètres de diagonale. On peut replier les faisceaux optiques au moyen de miroirs 12 comme on le voit sur la figure 1 de façon à diminuer l'encombrement et à réduire les masques visuels du système de projection. Afin de garantir une solution compacte, l'utilisation d'un vidéoprojecteur compact à projection grand angle et courte distance de focalisation appelé « short throw projector » est préférable.

La face 14 de l'écran de visualisation 13 est semi-réfléchissante et semi-transparente. Elle diffuse l'image projetée vers l'oeil Y de l'utilisateur et laisse passer en partie la lumière venant de l'extérieur, symbolisée par la flèche blanche sur la figure 1. Cette face semi-transparente 14 a subi un traitement spécifique. Cette face semi-transparente comporte des motifs diffusants la lumière. Ces motifs sont localisés et régulièrement répartis. Ces motifs peuvent être réalisés par abrasion chimique ou par tout autre moyen permettant d'assurer la diffusion de la lumière sur la face initialement transparente de l'écran. Les procédés de réalisation actuels permettent de maîtriser avec une grande précision les différents paramètres des motifs tels que leurs formes, leurs dimensions, leurs caractéristiques photométriques et leurs positions.

A titre de premier exemple de réalisation, la figure 2 représente une vue de face d'un écran de visualisation selon l'invention comportant des motifs 15. Cette figure 2 comporte un agrandissement partiel de l'écran. Sur cette vue partielle, les motifs diffusants 15 apparaissent en noir. Sur cette figure, les motifs sont de forme carrée et sont répartis de façon régulière et isotrope selon un ordre matriciel. Bien entendu, d'autres formes et d'autres répartitions sont possibles. Les motifs peuvent être, par exemple, des carrés diffusants de 250 micromètres de côté répétés avec un pas de 500 micromètres. Plus généralement, le côté des carrés est compris entre 100 micromètres et 500 micromètres.

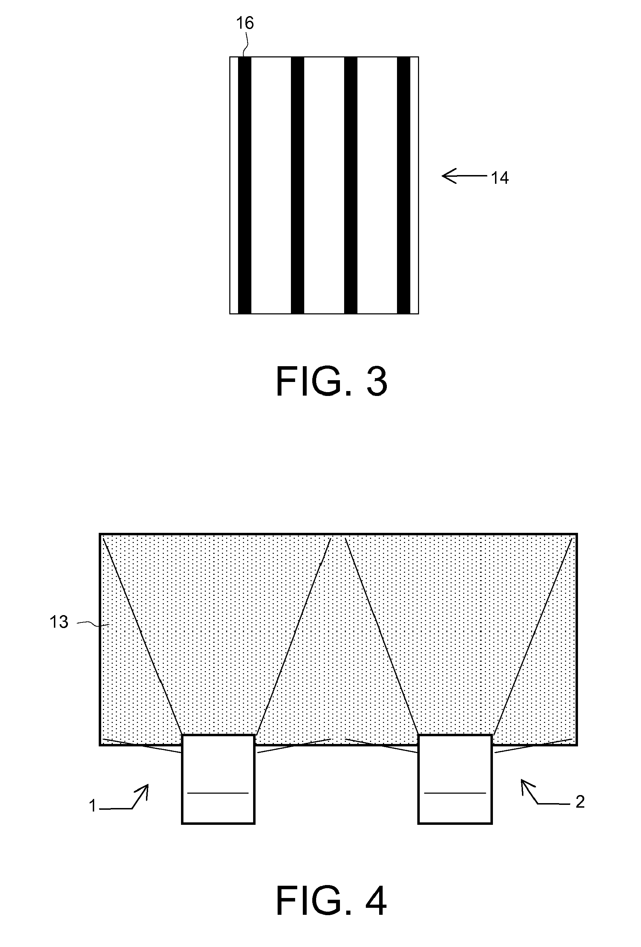

A titre de second exemple de réalisation, la figure 3 représente un agrandissement partiel d'un écran de visualisation selon l'invention. Dans le cas de la figure 3, les motifs diffusants 16 sont des bandes parallèles étroites équidistantes. La largeur des bandes peut être de 250 micromètres et elles peuvent être répétées avec un pas de 1000 micromètres.

Afin d'optimiser les propriétés optiques de l'écran de visualisation, les motifs diffusants et uniquement les motifs diffusants sont recouverts d'un traitement réfléchissant et occultant. De façon préférentielle, on réalise un dépôt d'argent ou d'aluminium sur les motifs diffusants. On améliore ainsi la réflexion des motifs et on diminue également de façon importante toute diffusion vers l'utilisateur de lumière arrivant de l'extérieur.

Le ratio de la surface diffusante occupée par les motifs sur la surface non traitée et transparente de la face de l'écran permet de régler aisément les taux de réflexion et de transmission de l'écran de visualisation. Ainsi, des carrés diffusants de 250 micromètres de côté répétés avec un pas de 500 micromètres occupent 25% de la surface de l'écran.

Dans une variante de réalisation, on peut réaliser un dispositif d'affichage optimisé pour projeter le flux de l'image uniquement sur les motifs diffusants. Cette fonction peut être réalisée par un dispositif à balayage laser, projetant le faisceau laser séquentiellement sur les plots ou sur les motifs de diffusion.

L'écran est de préférence réalisé en verre minéral. Il peut être plan ou courbe. Il peut prendre tout type de forme. Ainsi, il peut être de forme rectangulaire ou de forme quelconque.

Le projecteur d'images peut être autonome. Il comporte alors son propre écran de visualisation semi-transparent. Dans une variante, l'écran peut être intégré à la structure du véhicule ou de l'aéronef. Il peut alors faire partie intégrante du pare-brise. On peut alors projeter l'image directement sur le pare-brise, ce qui limite les surfaces vitrées traversées par la lumière venant de l'extérieur et dégage l'espace placé devant le pilote.

On peut employer, comme on le voit sur la figure 4, plusieurs projecteurs 1 et 2 pour éclairer une même surface d'écran 13 de grande dimension, chaque projecteur donnant une image couvrant une zone particulière de la surface d'écran.

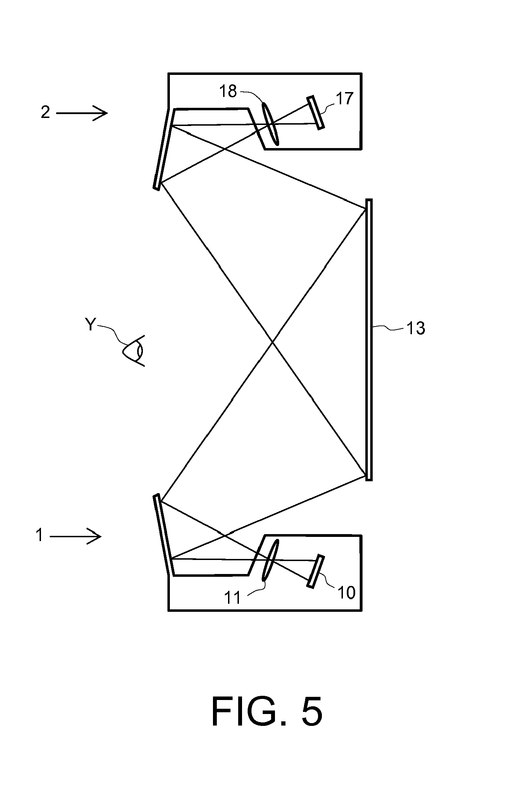

Comme illustré en figure 5, on peut également, à l'inverse, utiliser plusieurs ensembles comprenant chacun un afficheur et une optique de projection pour éclairer un seul et même écran de visualisation 13. Sur la figure 5, le système comprend deux ensembles de projection 1 et 2. Le premier ensemble 1 comprend l'afficheur 10 et l'optique 11 et le second ensemble 2 comprend l'afficheur 17 et l'optique 18.

Cette dernière disposition assure une bien meilleure disponibilité de l'écran dans la mesure où la perte d'un afficheur est sans conséquence sur l'affichage. Cette sécurisation du système de visualisation est fondamentale en utilisation aéronautique où le taux de disponibilité des informations doit être nécessairement très élevé.

Le système selon l'invention peut avoir, à titre d'exemples, les utilisations suivantes:
- Utilisation comme visualisation tête basse de type PFD signifiant « Primary Flight Display » ou ND signifiant « Navigation Display ») ou « Système » dans un cockpit d'aéronef. La transparence de l'écran permet la vision du paysage extérieur ;
- Utilisation comme écran de partage d'informations entre les deux pilotes d'un aéronef. Les pilotes se voient et voient des informations concernant le système avionique ou la navigation. L'écran est orthogonal au piédestal séparant pilote et copilote ;
- Remplacement d'un système tel que l'auvent ou « glareshield » situé dans la planche de bord et utilisé pour certains postes de commande et l'instrumentation de secours ;
- Utilisation comme HUD non-conforme et non-collimaté à large boîte-à-oeil pour l'affichage des informations de pilotage et de système ;
- Utilisation comme vitre latérale informative.

Le dispositif selon l'invention permet de répondre aux objectifs suivants :
- Taux de transparence important de l'écran de visualisation ;
- Rendement acceptable de l'image projetée ;
- Champ visuel important ;
- Boîte-à-oeil de très grande dimension permettant l'observation de la même image par plusieurs personnes ;
- Faible sensibilité à la pollution lumineuse due à la lumière ambiante provenant de l'extérieur.

La conformité de l'image avec le paysage extérieur n'est pas assurée par un tel dispositif qui induit de la parallaxe. Cependant, cette parallaxe peut être minimisée par une détection de position de la tête ou des yeux de l'utilisateur et une compensation dynamique de l'image projetée.

Le système selon l'invention présente les autres avantages suivants :
- Facilité de réalisation de l'écran de visualisation ;
- Réglage facile des taux de réflexion et de transmission en jouant sur les caractéristiques optiques et géométriques des motifs diffusants ;
- Faible diffusion de la lumière externe ;
- Système peu coûteux et utilisant des composants issus ou voisins de composants grand public comme les afficheurs ou les optiques de projection ;
- Projection d'images possible sur tous types, toutes formes et tous formats de surface de visualisation.

## Revendications

1. Système de visualisation comportant au moins un premier projecteur d'images (1) comportant un premier afficheur (10), une première optique de projection (11) et un écran de visualisation (13) comportant une face semi-transparente (14), l'image dudit premier afficheur étant réalisée par la première optique de projection sur cette face semi-transparente, **caractérisé en ce que** ladite face semi-transparente comporte une pluralité de motifs (15, 16) diffusants la lumière régulièrement répartis, lesdits motifs comportant un traitement réfléchissant.

2. Système de visualisation selon la revendication 1, **caractérisé en ce que** la surface occupée par les motifs diffusants (15, 16) est comprise entre 20% et 50% de la surface totale de la face semi-transparente.

3. Système de visualisation selon l'une des revendications précédentes, **caractérisé en ce que** les motifs (15) sont des carrés, le côté des carrés étant compris entre 100 micromètres et 500 micromètres.

4. Système de visualisation selon la revendication 3, **caractérisé en ce que** le côté des carrés vaut 250 micromètres.

5. Système de visualisation selon l'une des revendications 1 à 2, **caractérisé en ce que** les motifs (16) sont des bandes dont la largeur est comprise entre 100 micromètres et 500 micromètres.

6. Système de visualisation selon l'une des revendications précédentes, **caractérisé en ce que** le système comporte au moins un second projecteur d'images (2) comportant un second afficheur et une seconde optique de projection, l'image du premier afficheur étant réalisée par la première optique de projection sur une première zone de la face semi-transparente de l'écran de visualisation, l'image du second afficheur étant réalisée par la seconde optique de projection sur une seconde zone de la face semi-transparente de l'écran de visualisation, la seconde zone étant en partie ou en totalité disjointe de la première zone.

7. Système de visualisation selon l'une des revendications précédentes, **caractérisé en ce que** le système comporte au moins un troisième projecteur d'images (2) comportant un troisième afficheur (17) et une troisième optique de projection (18), l'image du premier afficheur (10) étant réalisée par la première optique de projection (11) sur une première zone de la face semi-transparente (14) de l'écran de visualisation, l'image du troisième afficheur (16) étant réalisée par la troisième optique de projection (18) sur la même première zone de la face semi-transparente (14) de l'écran de visualisation.

8. Système de visualisation selon l'une des revendications précédentes, **caractérisé en ce que** l'écran de visualisation est un pare-brise de véhicule.

9. Système de visualisation selon l'une des revendications précédentes, **caractérisé en ce que** l'écran de visualisation est la verrière d'un cockpit d'aéronef.
